(19) **Europäisches Patentamt / European Patent Office / Office européen des brevets**

(11) **EP 1 449 025 B1**

(12) **EUROPEAN PATENT SPECIFICATION**

(45) Date of publication and mention
of the grant of the patent:
**22.07.2009 Bulletin 2009/30**

(51) Int Cl.:
***G02F 1/1335*** (2006.01)

(21) Application number: **02772732.0**

(86) International application number:
**PCT/IB2002/004186**

(22) Date of filing: **10.10.2002**

(87) International publication number:
**WO 2003/034132 (24.04.2003 Gazette 2003/17)**

(54) **PIXEL ELECTRODE HAVING REFLECTIVE AND TRANSMISSIVE AREAS AND LIQUID CRYSTAL DISPLAY DEVICE USING THE SAME**

BILDELEKTRODE MIT REFLEKTIERENDEN UND TRANSMITTIERENDEN BEREICHEN UND DIESE VERWENDENDE FLÜSSIGKRISTALLANZEIGEVORRICHTUNG

ELECTRODE DE PIXEL PRESENTANT DES ZONES DE REFLEXION ET DE TRANSMISSION ET DISPOSITIF D'AFFICHAGE A CRISTAUX LIQUIDES UTILISANT CETTE DERNIERE

(84) Designated Contracting States:
**AT BE BG CH CY CZ DE DK EE ES FI FR GB GR IE IT LI LU MC NL PT SE SK TR**

(30) Priority: **11.10.2001 JP 2001314348**

(43) Date of publication of application:
**25.08.2004 Bulletin 2004/35**

(73) Proprietor: **TPO Hong Kong Holding Limited Shatin, Hong Kong (CN)**

(72) Inventors:
• **UKAWA, Yusei**
  **NL-5656 AA Eindhoven (NL)**
• **INADA, Toshiya**
  **NL-5656 AA Eindhoven (NL)**
• **NASU, Kousuke**
  **NL-5656 AA Eindhoven (NL)**

(74) Representative: **Hutter, Jacobus Johannes et al Nederlandsch Octrooibureau**
**P.O. Box 29720**
**2502 LS Den Haag (NL)**

(56) References cited:
**EP-A- 1 113 308**

• **KUBO M ET AL: "Development of "Advanced TFT-LCD" with good legibility under any ambient light intensity" , 6TH INTERNATIONAL DISPLAY WORKSHOPS. IDW'99, SENDAI, JAPAN, 1-3 DEC. 1999 , JOURNAL OF THE SOCIETY FOR INFORMATION DISPLAY, 2000, SOC. INF. DISPLAY, USA, PAGE(S) 299 - 304 XP002240612 ISSN: 1071-0922 cited in the application the whole document**

**EP 1 449 025 B1**

## Description

BACKGROUND OF THE INVENTION

1. Field of the Invention

The present invention relates to a pixel electrode having reflective and transmissive areas. The present invention also relates to a pixel electrode used in a transflective liquid crystal display device, and more particularly, to a pixel electrode suitable for an active-matrix transflective liquid crystal display device.

Furthermore, the present invention relates to a liquid crystal display device using the pixel electrode.

2. Description of Related Art

So-called transflective liquid crystal display devices have been put into full-scale practical use. In such a device, an external light ray incident from a front side is subjected to optical modulation according to an image to be displayed and is reflected to be led to the front side, while an incident light ray originated in the backlight system from a rear side is similarly subjected to optical modulation according to an image to be displayed and is transmitted to be led to the same front side. This type of liquid crystal display device provides effective image display because of external light or ambient light (reflective mode) when the use environment is brighter and of emitted light (transmissive mode) from the back light system when the use environment is dark.

Such a type of liquid crystal display device is disclosed in M.Kubo, et al. "Development of Advanced TFT with Good Legibility under Any Intensity of Ambient Light", IDW' 99, Proceedings of The Sixth International Display Workshops, AMD3-4, page 183-186, Dec.1, 1999, sponsored by ITE and SID" as a reference of the prior art. In this device, each pixel electrode is divided into a reflective area and a transmissive area. The reflective area is apportioned a reflective electrode portion of aluminium covering an acrylic resin with an uneven surface, and the transmissive area is apportioned a transmissive electrode portion of ITO (Indium Tin Oxide) with a flat surface. The transmissive area is provided at the center of a rectangular pixel area and has a shape of rectangle substantially similar to the shape of the pixel area, whereas the reflective area is a part in the pixel area other than the rectangular transmissive area and has a shape of surrounding the transmissive area. Such pixel configuration etc. have aimed to improve legibility.

SUMMARY OF THE INVENTION

The inventors have found out that such a conventional liquid crystal display device has a large transition area between the reflective and transmissive areas in a pixel electrode, the transition area exhibits the behaviour of light different from that in the originally intended reflective area, and thereby improper reflected light is caused in a reflection mode. The improper reflected light is undesirable for faithful display of pixel information to be displayed within a pixel, and may impede the improvement of image quality in the entire display screen. For example, it may have disadvantages in respects of contrast ratio, image brightness and matching with an opposed color filter.

The present invention is carried out in view of the foregoing, and its object is to provide a pixel electrode and a liquid crystal display device using it, which can reduce improper reflected light.

Another object of the present invention is to provide a pixel electrode and a liquid crystal display device using it, which can reduce improper reflected light and thereby contribute to improvements in contrast ratio or display quality.

In order to achieve the above objects, a pixel electrode of one aspect of the present invention is a pixel electrode according to claim 1.

According to this aspect, it is possible to further decrease a space and/or area occupied by the transition area portion. In other words, when an area delimited by a transition area portion is kept the same, the transition area portion with a shape according to this aspect is smaller than a conventional transition area portion with a rectangular shape (i.e., shape without roundness). In this way, it is possible to suppress improper reflected light possibly occurring in the transition area portion, and to contribute to improvements in contrast ratio or display quality. From a different point of view, the decrease of the transition area portion enables to use the larger (wider) reflective and transmissive areas of a pixel electrode within the pixel. Therefore, with structural elements kept unchanged except the transition area portion, it is possible to exhibit the full effect of display in each of the reflective mode and the transmissive mode.

This aspect may be **characterized in that** the transition area portion has a circular ring shape of surrounding the transmissive area portion on a plan view.

Further, the aspect may be **characterized in that** the transition area portion has a shape that is along an outline of an ellipse surrounding the transmissive area portion on a plan view.

In order to achieve the above objects, a pixel electrode of another aspect of the present invention is a pixel electrode according to claim 4.

Also according to this aspect, in the same way as already described, it is possible to decrease a space or area occupied by the transition area portion, thereby enabling suppression of improper reflected light and improvement in contrast ratio or display quality.

In addition, forming the transition area portion in a shape, instead of a shape that is simply along an outline of a rectangle, which is along an outline of a polygon with large interior angles or is along a curve with a large radius of curvature on a plan view provides an advantage to manufacture, in particular, to etching process that a desired pattern of the portions can be accurately formed.

In each of the aspects, the transmissive portion area may be formed with an island shape, substantially at a center of the pixel area on a plan view.

Further, the aspects may be **characterized in that** a main surface of the reflective area portion and a main surface of the transmissive area portion are different in height by a predetermined height.

Furthermore, the aspects may be **characterized in that** the electrode comprises: a step forming layer supported by a base layer, wherein a recess portion is formed for a pixel, the recess portion having an opening corresponding to the transmissive area portion and a wall face of a predetermined height; a transmissive electrically-conductive layer supported by the base layer, at least a part of which is formed within the opening; and a reflective electrically-conductive layer extending over a top face and the wall face of the step forming layer, which is in contact with the transmissive electrically-conductive layer, wherein the transmissive area portion substantially corresponds to an exposed surface of the transmissive electrically-conductive layer, the reflective area portion substantially corresponds to a portion of the reflective electrically-conductive layer, which extends over a top face of the step forming layer, and the transition area portion substantially corresponds to a portion of the reflective electrically-conductive layer, which extends over a wall face of the step forming layer and to a portion of the reflective electrically-conductive layer, which is in contact with the transmissive electrically-conductive layer.

This may be **characterized in that** a surface of the step forming layer and/or a surface of the reflective electrically-conductive layer are/is roughened. Such roughness can offer good characteristics of optical diffusion by being combined with a generally rounded shape of the transition area portion according to the present invention, and in particular can achieve more uniform diffusion within a pixel.

A further aspect of the present invention provides a liquid crystal display device using a pixel electrode according to each of the above-mentioned aspects and their preferable embodiments.

In this way, it is possible to exhibit the above-mentioned advantages of the pixel electrode in actual display devices.

This aspect may be **characterized in that** the display device comprises: two opposed substrates between which a liquid crystal medium is sandwitched; driving elements provided on one of the substrates in correspondence with pixels arranged substantially in matrix, for driving the pixels individually; and a common electrode provided on the other of the substrates, wherein the pixel electrodes are individually connected to outputs of the driving elements.

By virtue of the constitution, it is possible to assuredly obtain liquid crystal display devices which can make full use of the advantages of the above-mentioned pixel electrodes.

BRIEF DESCRIPTION OF THE DRAWINGS

Fig. 1 is a schematic plan view of a pixel electrode used in a liquid crystal display device according to one embodiment of the present invention.
Fig. 2 is a cross-sectional view of the pixel electrode in Fig.1.
Fig. 3 is a schematic plan view of a pixel electrode according to the first modification in the present invention.
Fig. 4 is a schematic plan view of a pixel electrode according to the second modification in the present invention.
Fig. 5 is a schematic plan view of a pixel electrode according to the third modification in the present invention.
Fig. 6 is a schematic plan view of a pixel electrode according to the fourth modification in the present invention.

DESCRIPTION OF THE PREFERRED EMBODIMENT (S)

Now the above-mentioned and other aspects of the present invention is specifically described with reference to accompanying drawings.

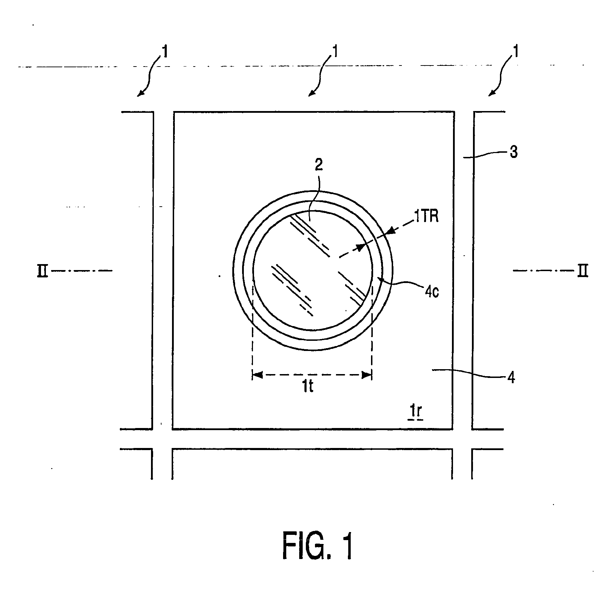

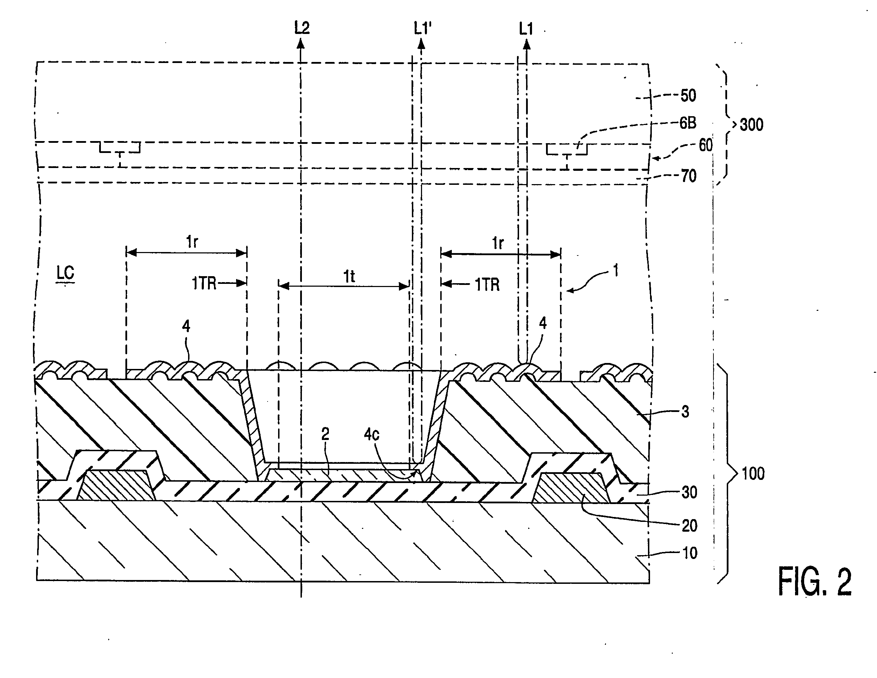

Fig. 1 illustrates a schematic plan view of a pixel electrode used in a half transmissive reflection type (transflective) liquid crystal display device according to one embodiment of the present invention, and Fig. 2 illustrates a cross-sectional construction of the pixel electrode.

Pixel electrodes 1 are provided on a rear side substrate assembly 100 opposed to a display screen of this display device, and are arranged in matrix in the entire display area. The substrate assembly 100 is composed of a transparent substrate 10 made of glass or the like as a base, and on or above the substrate 10 are provided source bus lines 20 and a gate insulator film 30 that crosses the lines 20 and is laminated on the lines 20. While other needed layers and/or films are formed on the substrate 10, descriptions thereof should be referred to well-known documents and are omitted herein for the purpose of simplifying the descriptions.

The pixel electrode 1 has a reflective area portion 1r (a part of pixel electrode other than a circular portion in Fig. 1) for reflecting a light ray L1 from a display screen side in such a manner that the light ray is along a specified bidirectional optical path within a pixel area, and a transmissive area portion 1t for transmitting a light ray from a rear side to the display screen side in such a manner that the light ray is along a specified unidirectional optical path within the pixel area. The pixel electrode 1 further has a transition area portion 1TR being formed between the reflective area portion 1r and the transmissive area portion 1t and including a portion (4c) in which the reflective area portion and the transmissive area portion are coupled with each other. More specifically, the pixel electrode 1 is comprised of a transmissive electrically-conductive layer 2, a step-forming layer 3 and a reflective electrically-conductive layer 4.

The transmissive conductive layer 2 is made of an optically-transparent and electrically-conductive material such as ITO (Indium Tin Oxide), and in this embodiment, is formed on the gate insulator film 30 in the shape of an island at the center of the pixel area. The step-forming layer 3 is made of an electrically-insulating material such as an acrylic resin, and is supported by the substrate 10 and surrounds the transmissive conductive layer 2. It also takes the form of a step of a predetermined level different from a level of the transmissive conductive layer 2, described later. In this case the transmissive conductive layer 2 is accommodated in an opening of the step-forming layer 3, but it is not restrictive. The transmissive conductive layer 2 may extend beyond the opening. The reflective electrically-conductive layer 4 is made of an optically-reflective and electrically-conductive material such as aluminum, and extends over a top face and wall face of the step-forming layer 3 to cover substantially the whole of the surface of the layer 3 while making contact with the transmissive conductive layer 2. The reflective conductive layer 4 thus takes the form of outer outline of the pixel electrode 1.

Thus, the transmissive area portion 1t substantially corresponds to an exposed surface of the transmissive conductive layer 2, the reflective area portion 1r substantially corresponds to a portion of the reflective electrically-conductive layer 4, which extends over the top face of the step-forming layer 3, and the transition area portion 1 TR substantially corresponds to a portion of the reflective electrically-conductive layer 4, which extends over the wall face of the step-forming layer 3 and to a portion of the reflective electrically-conductive layer 4, which is in contact with the transmissive conductive layer 2.

In this embodiment, the top face of the step-forming layer 3 is roughened, the reflective electrically-conductive layer 4 is directly deposited on the roughened surface, and thereby a main reflective surface of the reflective electrically-conductive layer 4 is made uneven. Such an uneven reflective surface provides an effect of properly scattering the reflected light in the reflective mode. It should be noted that unevenness of the reflective electrically-conductive layer 4 and step-forming layer 3 shown in Fig. 2 is schematically depicted.

A front side substrate assembly 300 is provided opposed to the substrate assembly 100, and a liquid crystal medium LC is encapsulated between the substrate assemblies. The substrate assembly 300 has: a transparent substrate 50 as a base; a color filter 60 having coloring portions to correspond to and be assigned to respective pixels and having a black matrix 6B provided between the coloring portions; and a common electrode 70 made of, for example, ITO, extending over the entire display area. Other elements of the substrate assembly 300 should be referred to well-known documents in respect of the detail.

[0032] - As can be seen from Fig. 2, the pixel electrode 1 is opposed to the common electrode 70, and the liquid crystal medium LC is locally applied with an electric field in accordance with a difference between a voltage applied to the common electrode 70 and a voltage applied to the pixel electrode 1. The liquid crystal medium LC has the orientation of liquid crystal molecules for each pixel on the basis of this situation, and modulates the light entering the pixel electrode.

By the action of modulation in the liquid crystal medium, the reflective electrically-conductive layer 4 reflects the external light L1 from the display face side (or frontal light from the front light system not shown) on its top face and returns the light to the display face side (reflective mode). Meanwhile, in the same action of modulation, the transmissive conductive layer 2 causes rear light L2 from the back light system (not shown) to be transmitted through the layer 2, and leads the light L2 to the display face side (transmissive mode).

It is noted that, a structure is preferable in which an average thickness of the step-forming layer 3 is the same as a length of a gap (so-called cell gap) between the substrate assemblies, and an average height of the top face of the reflective electrically-conductive layer 4 is greater than a height of the surface of the transmissive conductive layer 2 by a predetermined length, so that lengths of the optical paths of the incident light L1 and L2 are the same as each other. In other words, while the incident light L1 is reflected by the reflective electrically-conductive layer 4 and is passed through the liquid crystal medium LC twice, the incident light L2 is passed through the liquid crystal medium LC only once. Therefore, the light L2 is provided with an optical path corresponding to one passage through the liquid crystal medium LC, of which the light L2 is short with respect to the light L1, so that the light L1 and L2 have substantially the equal optical path. By thus equalizing the optical paths, it is possible to equalize effects such as optical attenuation in the reflective and transmissive modes, and to improve display qualities, in particular, legibility.

As illustrated in Fig. 1, the reflective electrically-conductive layer 4 has an opening to expose the transmissive conductive layer 2, and in this embodiment, the opening has the shape of a perfect circle. In other words, the transition area 1TR has a circular ring shape that is a shape extending along an outline of the circle. Using the transition area 1TR with such a shape decreases a space or area occupied by the transition area portion.

In other words, when the exposed area of the transmissive conductive layer 2 bordered by the transition area portion 1TR is the same, the transition area portion with a rounded shape as in this embodiment requires to have smaller-area and space than a conventional transition area portion with a rectangular shape (i.e., without a rounded shape). It is thereby possible to suppress improper reflected light possibly occurring in the transition area 1 TR.

Assuming that there is an inner boundary line of the transition area portion where the boundary line forms, for example, a square with side-lengths A, the area of a portion defined by the boundary line is $A^2$, and the total length of the boundary line is 4A. On the contrary, the total length of a circular boundary line of the transition area portion 1TR in this embodiment with the same area is $2A\sqrt{\pi}$. Accordingly, when the area of the transition area portion is the same, the length of a boundary portion of the transition area portion in this embodiment is shorter than that of a boundary portion of the transition area portion in the shape of a square by a ratio of $\sqrt{\pi}/2$, and the space and area required for the transition area portion decrease by a degree according to the shortness.

As can be seen from Fig. 2, since the reflective electrically-conductive layer 4 has a slope along the wall face of the step-forming layer 3 in the transition area portion 1TR, it can not be expected that optical behaviors inherent in the reflective and transmissive modes like the behaviors of the incident light L1 and L2, and the degree of the slope is not constant. Furthernore, since light L1' from the display face side is reflected in a coupling portion 4c of the reflective conductive layer 4 and transmissive conductive layer 2, the light L1' has an optical path different from that of the reflected light L1 inherently required. This allows the equalization of optical paths described above to be impaired, resulting in being unable to make the expected improvements such as legibility.

According to this embodiment, since the space or area occupied by the transition area portion is decreased as described above, it is possible to decrease improper reflected light occurring in the transition area 1TR. From a different point of view, decreasing the transition area 1TR increases (widens) each of the reflective area portion 1r and transmissive area portion 1t of the pixel electrode 1 in a pixel area, namely leads effective utilization of the portion 1r and 1t with minimum wastage of them, so that it is possible to perform effective operations in both reflective and transmissive modes with structural elements kept unchanged except the transition area portion.

Thus, the pixel electrode of this embodiment is capable of decreasing improper reflected light, thereby improves the display contrast ratio in the liquid crystal display device, and contributes to improvements in display quality.

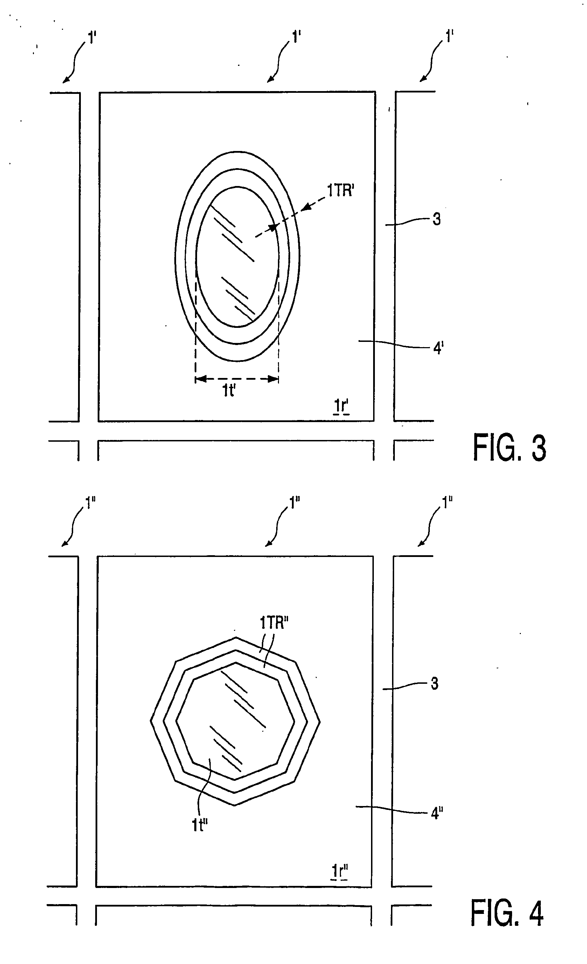

It should be noted that: the above embodiment is intended to make the transition area portion 1TR having the shape of an annular ring, but the portion may have other shapes. For example, in a modification illustrated in Fig. 3, a transition area portion 1TR' has an annular ring shape that is along an outline of an ellipse, surrounding the transmissive area portion 1t' on a plan view. In this case, the transmissive area portion 1t' necessarily has the shape of an ellipse. Also in this modification, the advantages as described above are obtained.

Alternatively, in Fig. 4, a transition area portion 1TR" has a shape that is along an outline of an octagon, surrounding the transmissive area portion 1t". In this case, the transmissive area portion 1t" is naturally in the shape of an octagon similar to the shape of the portion 1TR". It is important that advantages inherent in the present invention can be obtained by any transition area portion with a shape along an outline of a polygon having more sides than a rectangle. Fig. 4 merely shows one example of it.

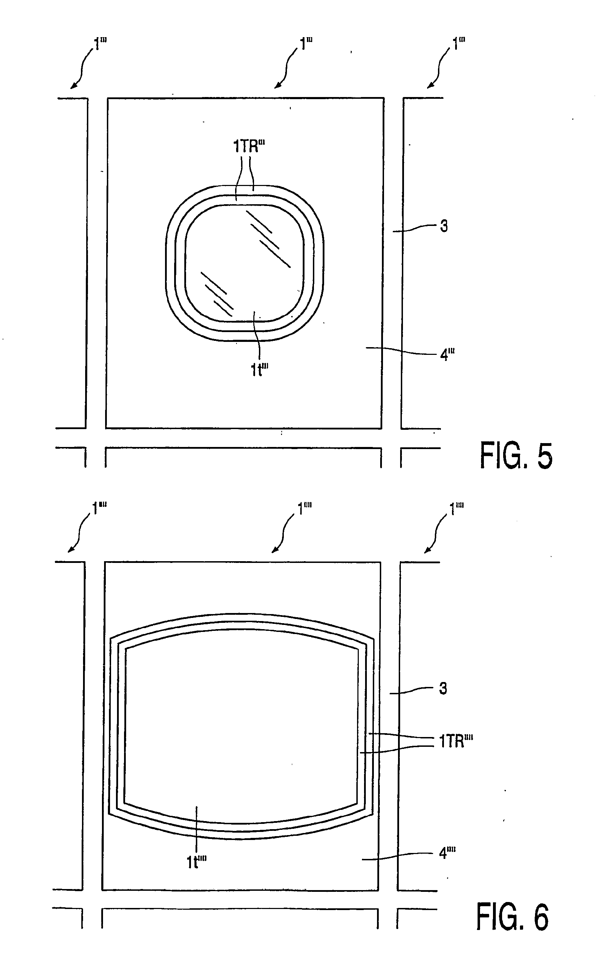

Fig. 5 shows a modification where a transition area portion has a shape of a generally rectangle with rounded corners. Also in this modification, the advantages can be obtained to some extent as compared with the conventional technique in which each corner is formed to have a sharp angle. The present invention does not exclude such a modification.

Further, Fig. 6 shows another modification where a transition area portion 1TR'''' has partly rounded portions on a plan view.

It is further noted that in the above there are described the cases where one pixel has a single transmissive area portion, but the present invention is not limited to such cases, and is basically applicable to cases of a pixel having a plurality of transmissive area portions. Further, while in the above embodiments there are described the cases where the reflective area portion and transmissive area portion are different in height, the present invention is not limited to such cases, and is applicable to cases of no difference in height. In other words, the present invention is widely applicable to pixel electrodes having a transition area portion which is formed between a reflective and transmissive area portions and which includes a portion where the area portions are coupled, independently of structures and constitutions of the reflective and transmissive area portions.

The present invention is capable of being carried into practice in various other modifications. For example, the present invention is not limited to an active matrix type, and is capable of being implemented in a passive matrix type.

The preferred embodiments described herein are therefore illustrative and not restrictive, the scope of the present invention being indicated by the appended claims and all variations which come within the meaning of the claims are intended to be embraced therein.

[Explanations of Symbols]

1, 1', 1", 1''', 1'''' ... pixel electrode
2 ... transmissive conductive layer

3 ... step-forming layer
4, 4', 4", 4"', 4""... reflective electrically-conductive layer
4c ... coupling portion
10 ... transparent substrate
20 ... source bus line
30 ... gate insulator film
LC ... liquid crystal medium
1t, 1t', 1t", 1t"' 1t""... transmissive area portion
lr, 1r', lr", lr"', lr""... reflective area portion
1TR, 1TR', 1TR", 1TR"', 1TR""... transition area portion
100 ... rear side substrate assembly
300 ... front side substrate assembly
50 ... transparent substrate
6B ... black matrix
60 ... color filter
70 ... common electrode
L1 ... reflected light
L2 ... transmitted light

**Claims**

1. A pixel electrode (1) for applying a voltage for each pixel, comprising: a reflective area portion (1r) for reflecting a light ray (L1) from a display face side in such a manner that the light ray (L1) is along a predetermined bidirectional optical path within a pixel; a transmissive area portion (1t) for transmitting a light ray (L2) from a rear side to the display face side in such a manner that the light ray (L2) is along a predetermined unidirectional optical path within the pixel; a step forming layer (3) supported by a base layer, wherein a recess portion is formed for a pixel, the recess portion having an opening corresponding to the transmissive area portion (1t) and a wall face of a predetermined height; a reflective electrically-conductive layer (4) extending over a top face and the wall face of the step forming layer (3); and **characterized in that** a transition area portion (1TR) is formed between the reflective area portion (1r) and the transmissive area portion (1t) and includes a portion in which the reflective area portion (1r) and the transmissive area portion (1t) are coupled, wherein the transition area portion (1TR) is extended with an at least partly rounded shape on a plan view.

2. A pixel electrode (1) as defined in Claim 1, **characterized in that** the transition area portion (1TR) has a circular ring shape of surrounding the transmissive area portion (1t) on a plan view.

3. A pixel electrode (1) as defined in Claim 1, **characterized in that** the transition area portion (1TR) has a shape that is along an outline of an ellipse surrounding the transmissive area portion (1t) on a plan view.

4. A pixel electrode (1) for applying a voltage for each pixel, comprising: a reflective area portion (1r) for reflecting a light ray (L1) from a display face side in such a manner that the light ray (L1) is along a predetermined bidirectional optical path within a pixel; a transmissive area portion (1t) for transmitting a light ray (L2) from a rear side to the display face side in such a manner that the light ray (L2) is along a predetermined unidirectional optical path within the pixel; a step forming layer (3) supported by a base layer, wherein a recess portion is formed for a pixel, the recess portion having an opening corresponding to the transmissive area portion (1t) and a wall face of a predetermined height; a reflective electrically-conductive layer (4) extending over a top face and the wall face of the step forming layer (3); and **characterized in that** a transition area portion (1TR) is formed between the reflective area portion (1r) and the transmissive area portion (1t) and includes a portion in which the reflective area portion (1r) and the transmissive area portion (1t) are coupled, wherein the transition area portion (1TR) is extended with a shape that is along an outline of substantially a polygon formed by five or more line segments on a plan view.

5. A pixel electrode as defined in any one of Claims 1-4, **characterized in that** the transmissive area portion (1t) is formed with an island shape, substantially at a center of the pixel area on a plan view.

6. A pixel electrode as defined in any one of Claims 1-5, **characterized in that** a main surface of the reflective area portion (1r) and a main surface of the transmissive area portion (1t) are different in height by a predetermined height.

7. A pixel electrode as defined in any one of Claims 1-6, **characterized in that** the electrode comprises a transmissive electrically-conductive layer (2) supported by the base layer, at least a part of which is formed within the opening, wherein the reflective electrically-conductive layer (4) is in contact with the transmissive electrically-conductive layer (3), wherein the transmissive area portion (1t) substantially corresponds to an exposed surface of the transmissive electrically-conductive layer (2), the reflective area portion (1r) substantially corresponds to a portion of the reflective electrically-conductive layer (4), which extends over a top face of the step forming layer (3), and the transition area portion (1TR) substantially corresponds to a portion of the reflective electrically-conductive layer (4), which extends over a wall face of the step forming layer (3) and to a portion of the reflective electrically-conductive layer (4), which is in contact with the transmissive electrically-conductive layer (2).

8. A pixel electrode (1) as defined in Claim 7, **characterized in that** a surface of the step forming layer (3) and/or a surface of the reflective electrically-conductive layer (4) are/is roughened.

9. A liquid crystal display device comprising a pixel electrode (1) as defined in any one of Claims 1-8.

10. A liquid crystal display device as defined in Claim 9, **characterized in that** the display device comprises: two opposed substrates (10) and (50) between which a liquid crystal medium (LC) is sandwitched; driving elements provided on one of the substrates (10) and (50) in correspondence with pixels arranged substantially in matrix, for driving the pixels individually ; and a common electrode provided on the other of the substrates (10) and (50), wherein the pixel electrodes are individually connected to outputs of the driving elements.

**Patentansprüche**

1. Pixelelektrode (1) zum Anlegen einer Spannung für jeden Bildpunkt, umfassend: einen reflektierenden Bereichsabschnitt (1r) zum Reflektieren eines Lichtstrahls (L1) von einer Anzeigeflächenseite derart, dass sich der Lichtstrahl (L1) entlang einem vorbestimmten bidirektionalen optischen Pfad innerhalb eines Pixels befindet; einen transmittierenden Bereichsabschnitt (1t) zum Transmittieren eines Lichtstrahls (L2) von einer Rückseite zu der Anzeigeflächenseite derart, dass sich der Lichtstrahl (L2) entlang einem vorbestimmten unidirektionalen optischen Pfad innerhalb des Pixels befindet; eine stufenbildende Schicht (3), die von einer Basisschicht getragen wird, wobei ein Ausnehmungsabschnitt für ein Pixel gebildet wird, wobei der Ausnehmungsabschnitt eine Öffnung, die dem transmittierenden Bereichsabschnitt (1t) entspricht, und eine Wandfläche einer vorbestimmten Höhe aufweist; eine reflektierende elektrisch leitfähige Schicht (4), die sich über eine obere Fläche und die Wandfläche der stufenbildenden Schicht (3) erstreckt; und **dadurch gekennzeichnet, dass** ein Übergangsbereichsabschnitt (1TR) zwischen dem reflektierenden Bereichsabschnitt (1r) und dem transmittierenden Bereichsabschnitt (1t) gebildet ist und einen Abschnitt einschließt, in dem der reflektierende Bereichsabschnitt (1r) und der transmittierende Bereichsabschnitt (1t) verbunden sind, wobei der Übergangsbereichsabschnitt (1TR) in einer Draufsicht mit einer mindestens teilweise abgerundeten Form ausgestreckt ist.

2. Pixelelektrode (1) nach Anspruch 1, **dadurch gekennzeichnet, dass** der Übergangsbereichsabschnitt (1TR) in einer Draufsicht eine kreisförmige Ringform aufweist, die den transmittierenden Bereichsabschnitt (1t) umgibt.

3. Pixelelektrode (1) nach Anspruch 1, **dadurch gekennzeichnet, dass** der Übergangsbereichsabschnitt (1TR) eine Form aufweist, die sich in einer Draufsicht entlang einem Umriss einer Ellipse befindet, die den transmittierenden Bereichsabschnitt (1t) umgibt.

4. Pixelelektrode (1) zum Anlegen einer Spannung für jeden Bildpunkt, umfassend: einen reflektierenden Bereichsabschnitt (1r) zum Reflektieren eines Lichtstrahls (L1) von einer Anzeigeflächenseite derart, dass sich der Lichtstrahl (L1) entlang einem vorbestimmten bidirektionalen optischen Pfad innerhalb eines Pixels befindet; einen transmittierenden Bereichsabschnitt (1t) zum Transmittieren eines Lichtstrahls (L2) von einer Rückseite zu der Anzeigeflächenseite derart, dass sich der Lichtstrahl (L2) entlang einem vorbestimmten unidirektionalen optischen Pfad innerhalb des Pixels befindet; eine stufenbildende Schicht (3), die von einer Basisschicht getragen wird, wobei ein Ausnehmungsabschnitt für ein Pixel gebildet wird, wobei der Ausnehmungsabschnitt eine Öffnung, die dem transmittierenden Bereichsabschnitt (1t) entspricht, und eine Wandfläche einer vorbestimmten Höhe aufweist; eine reflektierende elektrisch leitfähige Schicht (4), die sich über eine obere Fläche und die Wandfläche der stufenbildenden Schicht (3) erstreckt; und **dadurch gekennzeichnet, dass** ein Übergangsbereichsabschnitt (1TR) zwischen dem reflektierenden Bereichsabschnitt (1r) und dem transmittierenden Bereichsabschnitt (1t) gebildet ist und einen Abschnitt einschließt, in dem der reflektierende Bereichsabschnitt (1r) und der transmittierende Bereichsabschnitt (1t) verbunden sind, wobei der Übergangsbereichsabschnitt (1TR) in einer Draufsicht mit einer Form ausgestreckt ist, die sich im Wesentlichen entlang einem Umriss eines Polygons befindet, das durch fünf oder mehr Liniensegmente gebildet ist.

5. Pixelelektrode nach einem der Ansprüche 1-4, **dadurch gekennzeichnet, dass** der transmittierende Bereichsabschnitt (1t) mit einer Inselform gebildet ist, in einer Draufsicht im Wesentlichen in der Mittel des Pixelbereichs.

6. Pixelelektrode nach einem der Ansprüche 1-5, **dadurch gekennzeichnet, dass** sich eine Hauptoberfläche des reflektierenden Bereichsabschnitts (1r) und eine Hauptoberfläche des transmittierenden Bereichsabschnitts (1t) bezüglich der Höhe um eine vorbestimmte Höhe unterscheiden.

7. Pixelelektrode nach einem der Ansprüche 1-6, **dadurch gekennzeichnet, dass** die Elektrode eine transmittierende elektrisch leitfähige Schicht (2) umfasst, die von der Basisschicht getragen wird, von der zumindest ein Teil in der Öffnung gebildet ist, wobei die reflektierende elektrisch leitfähige Schicht (4) in Kontakt mit der transmittierenden elektrisch leitfähigen Schicht (3) steht, wobei der transmittierende Bereichsabschnitt (1t) im Wesentlichen einer freiliegenden Fläche der transmittierenden elektrisch leitfähigen Schicht (2) entspricht, der reflektierende Bereichabschnitt (1r) im Wesentlichen einem Abschnitt der reflektierenden elektrisch leitfähigen Schicht (4) entspricht, der sich über eine obere Fläche der stufenbildenden Schicht (3) erstreckt, und der Übergangsbereichsabschnitt (1TR) im Wesentlichen einem Abschnitt der reflektierenden elektrisch leitfähigen Schicht (4) entspricht, der sich über eine Wandfläche der stufenbildenden Schicht (3) und bis zu einem Abschnitt der reflektierenden elektrisch leitfähigen Schicht (4) erstreckt, der in Kontakt mit der transmittierenden elektrisch leitfähigen Schicht (2) steht.

8. Pixelelektrode (1) nach Anspruch 7, **dadurch gekennzeichnet, dass** eine Oberfläche der stufenbildenden Schicht (3) und/oder eine Oberfläche der reflektierenden elektrisch leitfähigen Schicht (4) angeraut ist/sind.

9. Flüssigkristallanzeigeeinrichtung umfassend eine Pixelelektrode (1) nach einem der Ansprüche 1-8.

10. Flüssigkristallanzeigeeinrichtung nach Anspruch 9, **dadurch gekennzeichnet, dass** die Anzeigeeinrichtung Folgendes umfasst: zwei gegenüberliegende Substrate (10) und (50), zwischen denen ein Flüssigkristallmedium (LC) sandwichartig angeordnet ist; Steuerelemente, die in Übereinstimmung mit Pixeln, die im Wesentlichen matrixartig angeordnet sind, auf einem der Substrate (10) und (50) vorgesehen sind, um die Pixel individuell anzusteuern; und eine gemeinsame Elektrode, die auf dem anderen der Substrate (10) und (50) vorgesehen ist, wobei die Pixelelektroden individuell mit den Ausgängen der Steuerelemente verbunden sind.

**Revendications**

1. Electrode de pixel (1) destinée à appliquer une tension pour chaque pixel, comprenant : une partie de zone de réflexion (1r) pour réfléchir un rayon lumineux (L1) depuis une face avant d'affichage d'une manière telle que le rayon lumineux (L1) soit disposé le long d'un trajet optique bidirectionnel prédéterminé dans un pixel ; une partie de zone de transmission (1t) pour transmettre un rayon lumineux (L2) d'une face arrière à la face avant d'affichage d'une manière telle que le rayon lumineux (L2) soit disposé le long d'un trajet optique unidirectionnel prédéterminé dans le pixel ; une étape de formation de couche (3) supportée par une couche de base, dans laquelle est formée une partie encastrée pour un pixel, la partie encastrée ayant une ouverture correspondant à la partie de zone de transmission (1t) et une face de paroi d'une hauteur prédéterminée ; une couche électroconductrice réfléchissante (4) s'étendant sur une face supérieure et la face de paroi de l'étape de formation de couche (3) ; et **caractérisée en ce qu'**une partie de zone de transition (1TR) est formée entre la partie de zone de réflexion (1r) et la partie de zone de transmission (1t) et comporte une partie dans laquelle la partie de zone de réflexion (1r) et la partie de zone de transmission (1t) sont couplées, la partie de zone de transition (1TR) s'étendant avec au moins une forme partiellement ronde sur une vue de dessus.

2. Electrode de pixel (1) selon la revendication 1, **caractérisée en ce que** la partie de zone de transition (1TR) a une forme d'anneau circulaire entourant la partie de zone de transmission (1t) sur une vue de dessus.

3. Electrode de pixel (1) selon la revendication 1, **caractérisée en ce que** la partie de zone de transition (1TR) a une forme qui est disposée le long d'un contour d'une ellipse entourant la partie de zone de transmission (1t) sur une vue de dessus.

4. Electrode de pixel (1) destinée à appliquer une tension pour chaque pixel, comprenant : une partie de zone de réflexion (1r) pour réfléchir un rayon lumineux (L1) depuis une face avant d'affichage d'une manière telle que le rayon lumineux (L1) soit disposé le long d'un trajet optique bidirectionnel prédéterminé dans un pixel ; une partie de zone de transmission (1t) pour transmettre un rayon lumineux (L2) d'une face arrière à la face avant d'affichage d'une manière telle que le rayon lumineux (L2) soit disposé le long d'un trajet optique unidirectionnel prédéterminé dans le pixel ; une étape de formation de couche (3) supportée par une couche de base, dans laquelle une partie encastrée est formée pour un pixel, la partie encastrée ayant une ouverture correspondant à la partie de zone de transmission (1t) et une face de paroi d'une hauteur prédéterminée ; une couche électroconductrice réfléchissante (4) s'étendant sur une face supérieure et la face de paroi de l'étape de formation de couche (3) ; et **caractérisée en ce qu'**une partie de zone de transition (1TR) est formée entre la partie de zone de réflexion (1r) et la partie de zone de transmission (1t) et comprend une partie dans laquelle la partie de zone de réflexion (1r) et la partie de zone de transmission (1t) sont couplées, la partie de zone de transition (1TR) s'étendant avec une forme qui est disposée le long d'un contour de sensiblement un polygone formé par cinq segments de ligne ou plus sur une vue de dessus.

5. Electrode de pixel selon l'une quelconque des revendications 1 à 4, **caractérisée en ce que** la partie de zone de transmission (1t) est formée avec une forme d'île, sensiblement en un centre de la zone de pixel sur une vue de dessus.

6. Electrode de pixel selon l'une quelconque des revendications 1 à 5, **caractérisée en ce que** la hauteur d'une surface principale de la partie de zone de réflexion (1r) et la hauteur d'une surface principale de la partie de zone de transmission (1t) sont différentes d'une hauteur prédéterminée.

7. Electrode de pixel selon l'une quelconque des revendications 1 à 6, **caractérisée en ce que** l'électrode comprend une couche électroconductrice émettrice (2) supportée par la couche de base, dont au moins une partie est formée dans l'ouverture, sachant que la couche électroconductrice réfléchissante (4) est en contact avec la couche électroconductrice émettrice (3), sachant que la partie de zone de transmission (1t) correspond sensiblement à une surface exposée de la couche électroconductrice émettrice (2), la partie de zone de réflexion (1r) correspond sensiblement à une partie de la couche électroconductrice réfléchissante (4), qui s'étend sur une face supérieure de l'étape de formation de couche (3), et la partie de zone de transition (1TR) correspond sensiblement à une partie de la couche électroconductrice réfléchissante (4), qui s'étend sur une face de paroi de l'étape de formation de couche (3) et à une partie de la couche électroconductrice réfléchissante (4) qui est en contact avec la couche électroconductrice émettrice (2).

8. Electrode de pixel (1) selon la revendication 7, **caractérisée en ce qu'**une surface de l'étape de formation de couche (3) et/ou une surface de la couche électroconductrice réfléchissante (4) sont/est rugueuse(s).

9. Dispositif d'affichage à cristaux liquides comprenant une électrode de pixel (1) telle qu'elle est définie dans l'une quelconque des revendications 1 à 8.

10. Dispositif d'affichage à cristaux liquides selon la revendication 9, **caractérisé en ce que** le dispositif d'affichage comprend : deux substrats opposés (10) et (50) entre lequel est intercalé un milieu à cristaux liquides (LC) ; des éléments de commande disposés sur les substrats (10) et (50) en correspondance avec des pixels agencés sensiblement dans une matrice, destinés à commander individuellement les pixels ; et une électrode commune disposée sur l'autre des substrats (10) et (50), les électrodes de pixel étant connectées individuellement aux sorties des éléments de commande.

FIG. 1

FIG. 2

FIG. 3

FIG. 4

1'''
1'''
1'''

1TR'''

3

1t'''

4'''

**FIG. 5**

1''''
1''''
1''''

3

1TR''''

1t''''

4''''

**FIG. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M.Kubo et al.** Development of Advanced TFT with Good Legibility under Any Intensity of Ambient Light. *IDW' 99, Proceedings of The Sixth International Display Workshops, AMD3-4,* 01 December 1999, 183-186